# EUROPÄISCHE PATENTSCHRIFT

(11) **EP 2 293 052 B1**
(45) Veröffentlichungstag und Bekanntmachung des Hinweises auf die Patenterteilung: **12.03.2014**
(21) Anmeldenummer: 09169372.1
(22) Anmeldetag: 03.09.2009
(51) Int. Cl.: G01N 27/333, G01N 27/403, G01N 27/413

(54) **Wasseranalyse-Messanordnung**
Water analysis measuring assembly
Agencement de mesure d'analyse de l'eau

(43) Veröffentlichungstag der Anmeldung: 09.03.2011
(73) Patentinhaber: Hach Lange GmbH, 14163 Berlin (DE)
(72) Erfinder: Leyer, Axel, 41199 Mönchengladbach (DE); Heidemanns, Lothar, 41352 Korschenbroich (DE); Jonak, Andreas, 40667 Meerbusch (DE); Dr. Hahn, Markus, 47906 Kempen (DE); Kussmann, Michael, 40476 Düsseldorf (DE); Rudde, Heinz, 41836 Hückelhoven (DE); Rieger, Claudia, 40227 Düsseldorf (DE)
(74) Vertreter: ter Smitten, Hans

(56) Entgegenhaltungen:
- EP-A1- 1 219 959
- EP-A2- 0 156 376
- DE-A1- 19 626 277
- GB-A- 2 036 977
- US-A- 4 461 998
- POPKIROV G S ET AL: "A NEW IMPEDANCE SPECTROMETER FOR THE INVESTIGATION OF ELECTROCHEMICAL SYSTEMS" REVIEW OF SCIENTIFIC INSTRUMENTS, AIP, MELVILLE, NY, US, Bd. 63, Nr. 11, 1. November 1992 (1992-11-01), Seiten 5366-5372, XP000323561 ISSN: 0034-6748

## Beschreibung

Die Erfindung betrifft eine Wasseranalyse-Messanordnung zur Bestimmung von Ionen und/oder Ionischen Verbindungen in einem wässrigen Medium.

Eine Wasseranalyse-Messanordnung zur Bestimmung von in Wasser solvatisierten Ionen oder Ionischen Verbindungen, insbesondere zur Bestimmung der Konzentration von Wasserstoff-Ionen, also dem sog. pH-Wert, ist aus dem Stand der Technik bekannt. Solche Systeme, z.B. zur Bestimmung des pH-Wertes, arbeiten nach dem Prinzip einer elektrochemischen Zelle, die üblicherweise in Form einer Glaselektrode bzw. einer sog. Einstabsmesskette ausgeführt ist.

Eine konventionelle elektrochemische Zelle weist zwei separate Halbelemente auf, in denen jeweils eine Elektrode angeordnet ist, wobei das eine Halbelement eine Messelektrode und das andere Halbelement eine Referenzelektrode aufweist. Beide Halbelemente befinden sich in getrennten Lösungen, welche über einen Stromschlüssel miteinander verbunden sind. Alternativ sind beide Halbelemente auch in einer gemeinsamen Lösung eingetaucht. Die beiden Halbelemente bilden gemeinsam eine Messkette.

Konstruktiv ist eine elektrochemische Zelle dieser Art oft in Form eines doppelwandigen Glasrohrs realisiert. Das innere Rohr weist eine Messelektrode auf. Ferner weist das innere Rohr an seinem Ende eine semipermeable Glasmembran auf, die den Kontakt zur Messlösung herstellt. In dem äußeren Rohr befindet sich eine Referenzelektrode, die über einen Stromschlüssel, beispielsweise ein Doppeldiaphragma oder ein einzelnes Diaphragma, mit der Messlösung verbunden ist. Beide Rohre sind üblicherweise mit einer neutralen, gepufferten Elektrolyt-Lösung gefüllt, deren pH-Wert gleich 7 ist.

Gemessen wird die elektrische Spannung zwischen der Referenzelektrode und der Messelektrode, die wiederum abhängig ist von der Wasserstoff-Ionen-Konzentration in der Messlösung.

Einen Schwachpunkt bei dieser Art der Ausführung einer Einstabsmesskette bildet das Diaphragma, welches zwischen der Referenzelektrode und der Messlösung einen elektrischen Kontakt herstellt. In Abhängigkeit von der Konzentration der vorhandenen Ionen in der Messlösung, kann es aufgrund unterschiedlicher chemischer Potentiale zwischen dem Referenzelektrodenraum und der Messlösung im Laufe der Zeit zur einer Kontamination und/oder einer Verdünnung der gepufferten Elektrolyt-Lösung im Referenzelektrodenraum kommen. Die Kontamination und/oder Verdünnung führt dazu, dass der angezeigte pH-Wert nicht die tatsächliche Wasserstoff-Ionen-Konzentration wiedergibt. Weiterhin muss bei einer zu stark ausgeprägten Kontamination und/oder Verdünnung die vorhandene Elektrolyt-Lösung ersetzt werden, was wiederum mit einem hohen Aufwand verbunden ist. Des Weiteren kann es zu einer Verschmutzung und/oder einer Kontamination des zur Messlösung zugewandten Diaphragmas kommen, so dass dieses signifikante Fehlerpotentiale produziert.

Bei Einsatz in einem industriellen Regel-Prozess kommt bei einer derartigen Konstruktion eine weitere Schwierigkeit hinzu, nämlich das Elektro-Rauschen der Umgebung, in die das pH-System eingebaut ist. Dadurch ergeben sich Messungenauigkeiten, die in einem industriellen Regel-Prozess zu schwerwiegenden Folgen führen können.

Eine aus US 6 395 158 B1 bekannte Wasseranalyse-Messanordnung löst das Problem des Elektro-Rauschens, Hierbei wird zu der bereits bekannten Zweielektroden-Anordnung eine zusätzliche dritte Elektrode eingebaut, der sog. Ground Rod, wobei eine Differential-Messung zwischen der Messelektrode und der Referenzelektrode in Bezug auf die dritte Elektrode, also auf den Ground Rod, durchgeführt wird.

Weiterhin ist eine Wasseranalyse-Messanordnung aus WO 2007 023031 A1 bekannt, die den Schwachpunkt, den der Stromschlüssel darstellt, überwindet. Hierbei wird das einzelne Diaphragma durch eine Kammer mit zwei einzelnen Diaphragmen ersetzt, wobei die Kammer mit einem Elektrolyten gefüllt ist. Aufgrund dieser Anordnung kann die Elektrolyt-Lösung im Referenzelektrodenraum nicht mehr in dem Maße kontaminiert oder verdünnt werden, wie in einer konventionellen Anordnung. Ein vollständiger Schutz des Stromschlüssels zur Vermeidung einer Kontamination bzw. einer Verdünnung ist jedoch nicht möglich, da der Stromschlüssel andernfalls die notwendige Durchlässigkeit verlieren würde. Der Zustand des Stromschfüsseis beeinflusst die Qualität des Referenzsignales in erheblichem Maße, so dass hier eine Fehlerquelle liegt, die sich negativ auf einen Regel-Prozess auswirken kann.

Aufgabe der Erfindung ist es demgegenüber, eine Wasseranalyse-Messanordnung mit verbesserter Zuverlässigkeit zu schaffen.

Diese Aufgabe wird erfindungsgemäß gelöst durch eine Wasseranalyse-Messanordnung mit den Merkmalen des Patentanspruches 1.

Die erfindungsgemäße Wasseranatyse-Messanordnung weist ein geschlossenes Pufferlösungs-Gehäuse mit einer pH-Pufferlösung auf, das über einen Stromschlüssel mit einem wässrigen Medium verbunden ist, dessen Konzentration an Ionen und/oder Ionischen Verbindungen in einem wässrigen Medium bestimmt werden soll. Die in dem Pufferlösung-Gehäuse angeordnete hochohmige Referenzelektrode ist an einen hoch-impedanten Verstärker angeschlossen, wobei zwischen der Referenzelektrode und der Verstärker-Masse ein kapazitives Element geschaltet ist. Dabei liegt die Verstärker-Masse auf einer Masseelektrode, die mit dem wässrigen Medium in direktem Kontakt steht. Weiterhin weist die Wasseranalyse-Messanordnung eine Messelektrode, die mit dem wässrigen Medium in direktem Kontakt steht, und einen Wechselspannungsgenerator auf, der zwischen der Verstärker-Masse und der Masseelektrode liegt. Des Weiteren weist die Wasseranalyse-Messanordnung eine Redundanz-Einheit auf, die eine separate niedrig-impedante Redundanzelektrode in der pH-Pufferlösung in dem geschlossenen Pufferlösungs-Gehäuse und einen hoch-impedanten Redundanzelektroden-Verstärker mit einem kapazitiven Element zur Verstärker-Masse umfasst.

Eine derartige Wasseranalyse-Messanordnung mit einer Redundanz-Einheit ermöglicht die vollständige Impedanzüberwachung des Stromschlüssels und stellt ein zweites zusätzliches Referenzpotential zur Verfügung, welches durch die Einführung einer zusätzlichen zweiten Elektrode, nämlich der Redundanzelektrode, in das Pufferlösungs-Gehäuse und eine entsprechende Beschaltung und Auswertung realisiert wird. Die zusätzliche zweite Elektrode ist sehr niederohmig. Somit ermöglicht eine Reihenschaltung des niederohmigen Stromschlüssels und der zusätzlichen relativ niederohmigen Redundanzelektrode eine Bestimmung der Impedanz des Stromschlüssels über einen geeigneten Verstärker. Der Verstärker der Redundanzelektrode und der Referenzelektrode sollte jeweils einen Innenwiderstand aufweisen, der mindestens um den Faktor 100 - 1000 größer ist als der Innenwiderstand der Referenz- bzw. der Redundanzelektrode, so dass das Nutzsignal entsprechend verstärkt und ausgewertet werden kann.

Gemäß einer bevorzugten Ausgestaltung weist die Wasseranalyse-Messanordnung einen mit dem Redundanzelektroden-Verstärker verbundenen Erschöpfungsdetektor auf, der ein Erschöpfungssignal ausgibt, wenn der Innenwiderstand des Stromschlüssels einen Grenzwert erreicht, also diesen über- bzw. unterschreitet. Somit kann der Anwender über einen kritischen Zustand der Messanordnung rechtzeitig informiert werden, um Vorkehrungen treffen zu können, die eine gleichbleibend Qualität der Messungen sicherstellen und unbemerkte fehlerhafte Messungen verhindert.

Vorzugsweise weist die Wasseranalyse-Messanordnung eine Redundanzelektrode mit einem Innenwiderstand auf, der mindestens um den Faktor 100 niedriger ist, als der Innenwiderstand der Referenzelektrode. Hiermit kann bei einer entsprechenden Reihenschaltung der niedrig-impedanten Redundanzelektrode und des niedrig-impedanten Stromschlüssels eine Überwachung des Stromschlüssels gewährleistet werden. Eine derartige Überwachung ist mit einer hochohmigen pH-Elektrode nicht möglich, da hierbei kleine Veränderungen der Stromschlüssel-Impedanz nicht zuverlässig ermittelt werden können,

Vorzugsweise weist die Wasseranalyse-Messanordnung einen Stromschlüssel mit einem Innenwiderstand auf, der höchstens um den Faktor 100, besonders bevorzugt höchstens um den Faktor 10, größer ist als der Innenwiderstand der Redundanzelektrode. Somit kann sichergestellt werden, dass auch kleine Veränderungen der Stromschlüssef-Impedanz detektiert werden können.

Die Wasseranatyse-Messanordnung weist vorzugsweise einen Stromschlüssel auf, der aus einer separaten Elektrolyt-Kammer aufgebaut ist, die mit zwei Diaphragmen bestückt ist und eine Elektrolyt-Lösung oder ein Elektrolyt-Gel enthält. Die zwei Diaphragmen sind so angeordnet, dass das eine Diaphragma eine Verbindung von dem Elektrolyt zur pH-Pufferlösung darstellt und das zweite Diaphragma eine Verbindung von dem Elektrolyt zu dem wässrigen Medium darstellt. Bei dieser Konstruktion wird infolge einer Kontamination und/oder Verdünnung des Elektrolyten mindestens eine um den Faktor 40 geringere Verschiebung des pH-Wertes und somit eine genauere Analyse eines wässrigen Mediums erzielt als bei einem aus einem einfachen Diaphragma aufgebauten Stromschlüssel, bei dem die Kontamination unmittelbar auf die Pufferlösung wirkt.

Vorzugsweise weist die Wasseranalyse-Messanordnung eine pH-Pufferlösung auf, die eine neutrale pH-Lösung ist, wobei die neutrale pH-Lösung mit Salzen auf eine geeignete Molarität eingestellt wird.

Gemäß einer bevorzugten Ausgestaltung weist die Wasseranalyse-Messanordnung ein Pufferlösungs-Gehäuse auf, das ein Mindestvolumen an pH-Pufferlösung von 3 bis 5 mL aufweist. Da es im Laufe der Zeit zu einer Kontamination und/oder Verdünnung des Elektrolyten kommt, wird durch den Einsatz eines größeren Pufferlösungs-Gehäuses, das mit einer entsprechend großer pH-Pufferlösungs-Menge gefüllt ist, die Lebensdauer einer solchen Messanordnung erhöht.

Die Wasseranalyse-Messanordnung ist vorzugsweise zur Bestimmung von Ionen und/oder Ionischen Verbindungen bestimmt. Die Ionen werden aus den Elementen Wasserstoff, Chlor, Natrium und/oder Kalium gebildet. Die Ionischen Verbindungen werden typischerweise aus Verbindungen von Schwefel, Stickstoff, und/oder Phosphor gebildet.

Vorzugsweise ist die Redundanzelektrode eine besonders niedrig-impedante Metallelektrode. Bei einer Reihenschaltung zwischen der niedrig-impedanten Metall-Redundanzelektrode und dem niedrig-impedanten Stromschlüssel kann die Impedanz, und damit die Qualität des Stromschlüssels zuverlässig und kontinuierlich kontrolliert werden,

Gemäß einer bevorzugten Ausgestaltung ist die Referenzelektrode als eine Glaselektrode, eine Platinelektrode, eine Silberchloridelektrode oder eine Kalomelelektrode ausgebildet. Eine Glaselektrode ist weniger störanfällig gegenüber Fremdionen, die in Folge einer Kontamination in das Pufferlösungs-Gehäuse eindringen können, an den Elektrode irreversibel anhaften und das Signal verfälschen können.

Vorzugsweise besteht die Masseelektrode aus einem elektrisch leitfähigen Material, welches beispielsweise aus Stahl, Platin oder Titan, oder aus einem leitfähigen Kunststoff bestehen kann.

Die Wasseranalyse-Messanordnung weist vorzugsweise eine Messelektrode auf, die eine ionenselektive Elektrode oder eine pH-Elektrode sein kann.

Nachfolgend wird ein Ausführungsbeispiel der Erfindung anhand der Zeichnung näher erläutert.

Es zeigt:

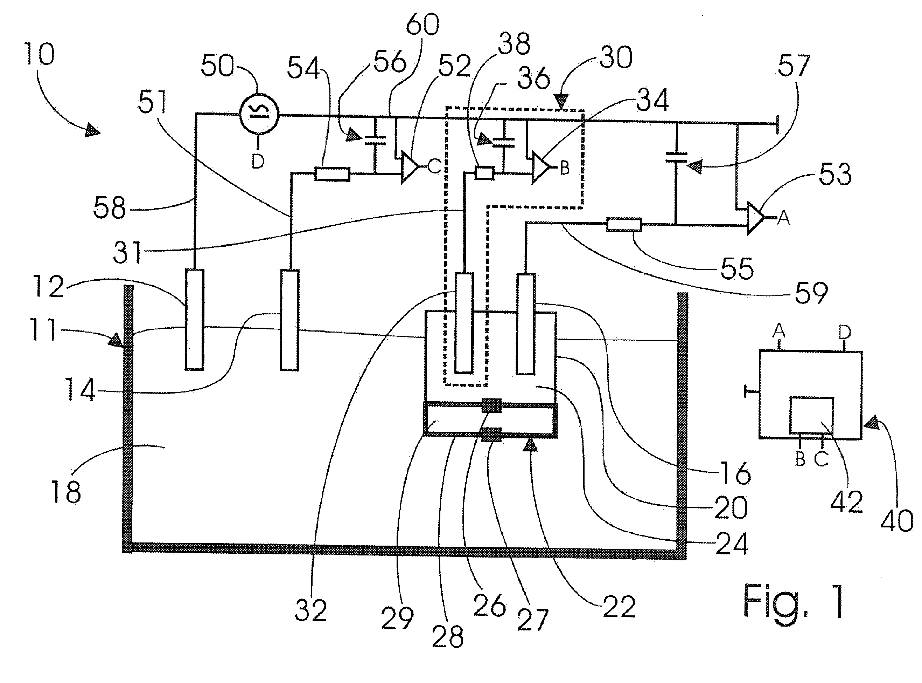

Fig. 1 eine schematische Darstellung der erfindungsgemäßen Wasseranalyse-Messanordnung

Fig. 1 zeigt schematisch eine Wasseranalyse-Messanordnung 10 zur Bestimmung von Ionen und/oder Ionischen Verbindungen in einem wässrigen Medium 18, wobei sich das wässrige Medium 18 in einem Becken 11 befindet. In dem Becken 11 ist ein Pufferlösungs-Gehäuse 20 angeordnet, welches ein Teil der Messanordnung ist und eine Redundanzeinheit 30, eine Referenzelektrode 16 und einen Stromschlüssel 22 aufweist.

Die Redundanzeinheit 30 besteht aus einer Redundanzelektrode 32, einem Vorwiderstand 38, einem kapazitiven Element 36 und einem Verstärker 34, wobei der Verstärker 34 einen Signalausgang B aufweist, und der Signalausgang B an einen Erschöpfungsdetektor 42 angeschlossen ist, der Teil einer Zentraleinheit 40 ist. Die Redundanzelektrode 32 ist mit einer Signalleitung 31 und über den Vorwiderstand 38 an den Verstärker 34 angeschlossen, wobei der Verstärker 34 sich auf eine Masseleitung 60 bezieht. Zwischen dem Vorwiderstand 38 und dem Verstärker 34 ist ferner ein kapazitives Element 36 angeordnet, wobei das kapazitive Element 36 an der Masseleitung 60 anliegt.

Als Verstärker werden vorliegend typischerweise hochohmige Operationsverstärker mit einer Verstärkung von eins, mit einem an die Masseleitung 60 angeschlossenen invertierenden Eingang und mit einem an das zu verstärkende Nutzsignal angeschlossenen nicht-invertierenden Eingang verwendet.

Das Pufferlösungs-Gehäuse 20 ist mit einer pH-Pufferlösung 24 gefüllt. Die Referenzelektrode 16 und die Redundanzelektrode 32 sind in die pH-Pufferlösung 24 eingetaucht und stehen mit der pH-Pufferlösung 24 in direktem Kontakt.

Der Stromschlüssel 22 besteht aus einer separaten Elektrolyt-Kammer 28, 5 die mit einem Elektrolyten 29 gefüllt ist, und zwei Diaphragmen 26, 27 die so angeordnet sind, dass das eine Diaphragma 26 eine Verbindung von dem Elektrolyt 29 zur pH-Pufferlösung 24 und das zweite Diaphragma 27 eine Verbindung von dem Elektrolyt 29 zu dem wässrigen Medium 18 herstellt.

Weiterhin sind in dem Becken 11 als Teil der Messanordnung 10 eine Messelektrode 14 und eine Masseelektrode 12 angeordnet, die beide mit dem wässrigen Medium 18 in direktem Kontakt stehen. Die Masseelektrode 12 ist mit einer Masseelektrodenleitung 58 an einen Wechselspannungsgenerator 50 angeschlossen, wobei der Wechselspannungsgenerator 50 über einen Steuereingang D an die Zentraleinheit 40 angeschlossen ist. Ferner ist der Wechselspannungsgenerator 50 an die Masseleitung 60 angeschlossen.

Die Messelektrode 14 ist mit einer Signalleitung 51 und über einen Vorwiderstand 54 an einen Verstärker 52 angeschlossen, wobei der Verstärker 52 einen Signalausgang C aufweist, und der Signalausgang C an einen Erschöpfungsdetektor 42 angeschlossen ist. Ferner ist der Verstärker 52 an die Masseleitung 60 angeschlossen. Zwischen dem Vorwiderstand 54 und dem Verstärker 52 ist ferner ein kapazitives Element 56 angeordnet, wobei das kapazitive Element 56 an der Masseleitung 60 anliegt.

Die Referenzelektrode 16 ist mit einer Signalleitung 59 und über einen Vorwiderstand 55 an einen Verstärker 53 angeschlossen, wobei der Verstärker 53 einen Signalausgang A aufweist, und der Signalausgang A an die Zentraleinheit 40 angeschlossen ist. Ferner ist der Verstärker 53 an die Masseleitung 60 angeschlossen. Zwischen dem Vorwiderstand 55 und dem Verstärker 53 ist ferner ein kapazitives Element 57 angeordnet, wobei das kapazitive Element 57 an der Masseleitung 60 anliegt.

Die Impedanzmessung des Stromschlüssels 22 erfolgt über die Redundanzelektrode 32, wobei die Redundanzelektrode 32 mit dem Signaleingang des Verstärkers 34 verbunden ist. Die Redundanzelektrode 32 erzeugt ein dem Logarithmus des Redoxpotentials der pH-Pufferlösung 24 proportionales Gleichspannungssignal. Da die pH-Pufferlösung 24 über den Stromschlüssel 22 mit dem wässrigen Medium 18 in Kontakt steht, wird ein stabiles Referenzpotential erzeugt. Die in die pH-Pufferlösung 24 eingetauchte Referenzelektrode 16 erzeugt ebenfalls ein stabiles Referenzpotential.

Zu Durchführung der Impedanzbestimmung des Stromschlüssels 22 wird von dem Wechselspannungsgenerator 50 über die Masseelektrode 12 ein niederfrequentes Wechselsignal in das wässrige Medium 18 eingespeist, und auf diese Weise auf die gesamte Messanordnung 10 gegeben. Das kapazitive Element 36 an dem Signaleingang des Redundanzelektroden-Verstärkers 34 erzeugt eine der Impedanz der Redundanzelektrode 32 umgekehrt proportionale Wechselspannung. Diese wird von dem Verstärker 34 verstärkt, und das Ausgangssignal an dem Erschöpfungsdetektor 42 ausgegeben. Dort wird das Ausgangssignal durch eine A/D-Wandlung digitalisiert und mit einem Grenzwert verglichen. Wenn der Grenzwert erreicht wird, wird ein Erschöpfungssignal ausgegeben. Auf diese Weise wird die Impedanz des Stromschlüssels 22 ermittelt und bewertet, so dass der Stromschlüssel 22 bzw. die Wasseranalyse-Messanordnung 10 rechtzeitig ausgewechselt werden kann, bevor sie zu fehlerhaften Messergebnissen führt.

Zusätzlich kann die Redundanzelektrode 32 als ein Referenzsystem bzw. ein Kontrollsystem für die Referenzelektrode 16 benutzt werden.

## Patentansprüche

1. Wasseranalyse-Messanordnung (10) zur Bestimmung von Ionen und/oder Ionischen Verbindungen in einem wässrigen Medium (18), mit:
einem geschlossenen Pufferlösungs-Gehäuse (20) mit einer pH-Pufferlösung (24); das über einen Stromschlüssel (22) mit dem wässrigen Medium (18) verbunden ist,
einer Referenzelektrode (16) im Pufferiösungs-Gehäuse (20) und einem hoch-impedanten Verstärker (53) mit einem kapazitiven Element (57) zwischen der Referenzelektrode (16) und der Verstärker-Masse, wobei die Verstärker-Masse auf einer Masseelektrode (12) liegt, die mit dem wässrigen Medium (18) in direkten Kontakt steht,
einem Wechselspannungsgenerator (50) zwischen der Verstärker-Masse und der Masseelektrode (12), und
einer Messelektrode (14) die mit dem wässrigen Medium (18) in direkten Kontakt steht, und
einer Redundanz-Einheit (30), die umfasst:
eine separate niedrig-impedante Redundanzelektrode (32) in dem geschlossenen Pufferfosungs-Gehäuse (20), und
einem hoch-impedanten Redundanzelektroden-Verstärker (34) mit einem kapazitiven Element (36) zu der Verstärker-Masse.

2. Wasseranalyse- Messanordnung (10) nach Anspruch 1, wobei ein mit dem Redundanzelektroden-Verstärker (34) verbundener Stromschlüssel-Erschöpfungsdetektor (42) vorgesehen ist, der ein Erschöpfungssignal ausgibt, wenn der Innenwiderstand des Stromschlüssels (22) einen Grenzwert erreicht.

3. Wasseranalyse-Messanordnung (10) nach Anspruch 1 oder 2, wobei der Innenwiderstand der Redundanzelelctrode (32) mindestens um den Faktor 100 niedriger ist, als der Innenwiderstand der Referenzelektrode (16).

4. lNasseranalyse-Messanordnung (10) nach einem der Ansprüche 1 - 3, wobei der Innenwiderstand des Stromschlüssels (22) höchstens um den Faktor 100, besonders bevorzugt höchstens um den Faktor 10 größer ist als der der Redundanzelektrode (32).

5. Wasseranalyse-Messanordnung (10) nach einem der vorangegangenen Ansprüche, wobei der Stromschlüssel (22) aus einer Elektrolyt-Kammer (28) aufgebaut ist, die mit zwei Diaphragmen (26, 27) bestückt ist und eine Elektrolyt-Lösung (29) oder ein Elektrolyt-Gel (29) enthält.

6. Wasseranalyse-Messanordnung (10) nach einem der vorangegangenen Ansprüche, wobei die pH-Pufferlösung (24) eine neutrale pH-Lösung enthält.

7. Wasseranalyse-Messanordnung (10) nach einem der vorangegangenen Ansprüche, wobei die neutrale pH-Lösung aus den Salzen Kaliumchlorid, Kaliumnitrat und/oder Natriumchlorid bestehen kann und mittels eines Säure-Basen-Puffers gepuffert ist.

8. Wasseranalyse-Messanordnung (10) nach einem der vorangegangenen Ansprüche, wobei das Pufferlösungsgehäuse (20) ein Mindestvolumen an pH-Pufferlösung (24) von 3 - 5 mL aufweist.

9. Wasseranalyse-Messanordnung (10) nach einem der vorangegangenen Ansprüche, wobei die Ionen und/oder Ionischen Verbindungen Wasserstoff, Chlorid, Natrium, Kalium, Sulfat, Ammonium, Phosphat oder Nitrat sein können.

10. Wasseranalyse-Messanordnung (10) nach einem der vorangegangenen Ansprüche, wobei die niedrig-impedante Redundanzelektrode (32) eine Metallelektrode ist.

11. Wasseranalyse-Messanordnung (10) nach einem der vorangegangenen Ansprüche, wobei die Referenzelektrode (16) eine Glaselektrode, eine Platinelektrode, eine Silberchloridelektrode oder eine Kalomelelektrode sein kann.

12. Wasseranalyse-Messanordnung (10) nach einem der vorangegangenen Ansprüche, wobei die Masseelektrode (12) aus einem leitfähigen Material, beispielsweise Stahl, Platin oder Titan, oder aus einem leitfähigen Kunststoff bestehen kann.

13. Wasseranalyse-Messanordnung (10) nach einem der vorangegangenen Ansprüche, wobei die Messelektrode (14) eine ionenselektive Elektrode oder eine pH-Elektrode sein kann.

## Claims

1. A water analysis measurement arrangement (10) for the determination of ions and/or ionic compounds in an aqueous medium (18), comprising:
a closed buffer solution housing (20) containing a pH buffer solution (24), the housing being in communication with the aqueous medium (18) via an electrolyte bridge (22),
a reference electrode (16) in the buffer solution housing (20) and a high-impedance amplifier (53) with a capacitive element (57) between the reference electrode (16) and the amplifier ground, the amplifier ground being on a ground electrode (12) that is in direct contact with the aqueous medium (18),
an AC voltage generator (50) between the amplifier ground and the ground electrode (12), and
a measurement electrode (14) in direct contact with the aqueous medium (18), and
a redundancy unit (30) comprising:
a separate low-impedance redundancy electrode (32) in the closed buffer solution housing (20), and
a high-impedance redundancy electrode amplifier (34) with a capacitive element (36) to the amplifier ground.

2. Water analysis measurement arrangement (10) of claim 1, wherein an electrolyte bridge depletion detector (42) is provided that is connected to the redundancy electrode amplifier (34) and outputs a depletion signal when the internal resistance of the electrolyte bridge (22) reaches a limit value.

3. Water analysis measurement arrangement (10) of claim 1 or 2, wherein the internal resistance of the redundancy electrode (32) is lower by at least a factor of 100 than the internal resistance of the reference electrode (16).

4. Water analysis measurement arrangement (10) of one of claims 1-3, wherein the internal resistance of the electrolyte bridge (22) is higher by at most a factor of 100, particularly preferred by at most a factor of 10, than that of the redundancy electrode (32).

5. Water analysis measurement arrangement (10) of one of the preceding claims, wherein the electrolyte bridge (22) is formed by an electrolyte chamber (26) equipped with two diaphragms (26, 27) and an electrolyte solution (29) or an electrolyte gel (29).

6. Water analysis measurement arrangement (10) of one of the preceding claims, wherein the pH buffer solution (24) contains a neutral pH solution.

7. Water analysis measurement arrangement (10) of one of the preceding claims, wherein the neutral pH solution may be formed by the salts potassium chloride, potassium nitrate and/or sodium chloride and wherein it is buffered using an acid-bases buffer.

8. Water analysis measurement arrangement (10) of one of the preceding claims, wherein the buffer solution housing (20) contains a minimum volume of 3 - 5 ml of a pH buffer solution (24).

9. Water analysis measurement arrangement (10) of one of the preceding claims, wherein the ions and/or ionic compounds can be hydrogen, chloride, sodium, potassium, sulfate, ammonium, phosphate or nitrate.

10. Water analysis measurement arrangement (10) of one of the preceding claims, wherein the low-impedance redundancy electrode (32) is a metal electrode.

11. Water analysis measurement arrangement (10) of one of the preceding claims, wherein the reference electrode (16) can be a glass electrode, a platinum electrode, a silver chloride electrode or a calomel electrode.

12. Water analysis measurement arrangement (10) of one of the preceding claims, wherein the ground electrode (12) may consist of a conductive material, such as steel, platinum or titanium, or of a conductive plastic material.

13. Water analysis measurement arrangement (10) of one of the preceding claims, wherein the measurement electrode (14) can be an ion-selective electrode or a pH electrode.

## Revendications

1. Agencement de mesure d'analyse de l'eau (10) pour la détection d'ions ou de composés ioniques dans un médium (18) aqueux, comprenant:
un boitier de solution tampon (20) fermé contenant une solution tampon de pH (24), relié au médium aqueux (18) par un pont d'électrolyte (22),
une électrode de référence (16) dans ledit boitier de solution tampon (20) et un amplificateur à haute impédance (53) avec un élément capacitif (57) entre ladite électrode de référence (16) et la masse de l'amplificateur, la masse de l'amplificateur étant prévue sur une électrode de masse (12) en contact direct avec ledit médium aqueux (18),
un générateur de tension alternative (50) entra ladite masse de l'amplificateur de l'électrode de masse (12), et
une électrode de mesure (14) en contact direct avec ledit médium aqueux (18), et
une unité de redondance (30) comprenant:
une électrode redondante (32) séparée, à basse impédance, dans ledit boitier de solution tampon (20) fermé, et
un amplificateur (34) à haute impédance, pour ladite électrode redondante, comprenant un élément capacitif (36) relié à la masse de l'amplificateur.

2. Agencement de mesure d'analyse de l'eau (10) selon la revendication 1, dans lequel un détecteur d'épuisement de l'électrode redondante (42) est prévu, relié à l'amplificateur (34) de ladite électrode redondante, émettant un signal d'épuisement si la résistance interne du pont d'électrolyte (22) atteint une valeur limite.

3. Agencement de mesure d'analyse de l'eau (10) selon les revendications 1 ou 2, dans lequel ladite résistance interne de ladite électrode redondante (32) est inférieure, par au moins le facteur 100, à la résistance interne de ladite électrode de référence (16).

4. Agencement de mesure d'analyse de l'eau (10) selon l'une quelconque des revendications 1 - 3, dans lequel ladite résistance interne dudit pont d'électrolyte (22) est supérieure à celle de ladite électrode redondante (32) par au plus le facteur 100, plus préférablement par au plus le facteur 10.

5. Agencement de mesure d'analyse de l'eau (10) selon l'une quelconque des revendications précédentes, dans lequel ledit pont d'électrolyte (22) est formé par une chambre d'électrolyte (28) munie avec deux diaphragmes (26, 27) et contenant une solution d'électrolyte (29) ou un gel d'électrolyte (29).

6. Agencement de mesure d'analyse de l'eau (10) selon l'une quelconque des revendications précédentes, dans lequel ladite solution tampon de pH (24) contient une solution de pH neutre.

7. Agencement de mesure d'analyse de l'eau (10) selon l'une quelconque des revendications précédentes, dans lequel la solution de pH neutre peut être formée par les sels chlorure de potassium, nitrate de potassium et/ou chlorure de sodium et est tamponné par un tampon acide-base.

8. Agencement de mesure d'analyse de l'eau (10) selon l'une quelconque des revendications précédentes, dans lequel le boitier de solution tampon (20) contient un volume minimum de solution tampon de pH (24) de 3 - 5 ml.

9. Agencement de mesure d'analyse de l'eau (10) selon l'une quelconque des revendications précédentes, dans lequel les ions et/ou les composés ioniques peuvent être l'hydrogène, le chlorure, le sodium, le potassium, le sulfate, l'ammonium, le phosphate ou le nitrure.

10. Agencement de mesure d'analyse de l'eau (10) selon l'une quelconque des revendications précédentes, dans lequel ladite électrode redondante à basse impédance (32) est une électrode métallique.

11. Agencement de mesure d'analyse de l'eau (10) selon l'une quelconque des revendications précédentes, dans lequel ladite électrode de référence (16) peut être un électrode en verre, une électrode en platine, une électrode en chlorure d'argent ou une électrode en calomel.

12. Agencement de mesure d'analyse de l'eau (10) selon l'une quelconque des revendications précédentes, dans lequel ladite électrode de masse (12) peut être formée d'un matériau conducteur comme, par exemple, l'acier, le platine ou le titane, ou d'une matière plastique conductrice.

13. Agencement de mesure d'analyse de l'eau (10) selon l'une quelconque des revendications précédentes, dans lequel ladite électrode (14) pet être une électrode sélective à ions ou une électrode de pH.
